# EUROPÄISCHE PATENTANMELDUNG

(11) **EP 1 035 190 A1**
(43) Veröffentlichungstag der Anmeldung: **13.09.2000**
(21) Anmeldenummer: 00105106.9
(22) Anmeldetag: 10.03.2000
(51) Int. Cl.: C09K 15/32, C08G 77/22, C09D 143/04

(54) **Verwendung von makromolekularen Zusammensetzungen auf Silanbasis als gegenüber konzentrierten oxidierenden Säuren widerstandsfähige Werkstoffe**

(30) Priorität: 11.03.1999 DE 19910905
(71) Anmelder: FRAUNHOFER-GESELLSCHAFT ZUR FÖRDERUNG DER ANGEWANDTEN FORSCHUNG E.V., 80636 München (DE)
(72) Erfinder: Schmitzer, Siegfried, 97070 Würzburg (DE); Wolter, Herbert, 97941 Tauberbischofsheim (DE)
(74) Vertreter: Olgemöller, Luitgard, Dr.

(57) **Zusammenfassung**

Die vorliegende Erfindung betrifft die Verwendung einer makromolekularen Zusammensetzung, gebildet durch hydrolytische Kondensation und organische Polyreaktion mindestens eines Silans mit mindestens einem einer hydrolytischen Kondensation unter Ausbildung von Si-O-Si-Bindungen zugänglichen Substituenten und mindestens einem organischen Substituenten, der eine einer entsprechenden organischen Polyreaktion unterwerfbare Gruppe trägt, gegebenenfalls unter Zusatz (a) weiterer hydrolytisch kondensierbarer Verbindungen von Elementen aus der Gruppe B, Al, P, Sn, Pb, der Übergangsmetalle, der Lanthaniden und der Aktiniden und/oder (b) weiterer organischer einpolymerisierbarer Verbindungen und/oder (c) von Siloxanen, wobei diese Zusammensetzung gegebenenfalls (d) Füllstoffe enthält und in Form eines Probenkörpers mit den Abmessungen 2mm x 2mm x 12mm bei einer 10-tägigen Lagerung in 65%iger HNO3 bei 25°C nicht mehr als 1,75% Gewichtszunahme und keine Verfärbung aufweist, als gegenüber konzentrierten oxidierenden Säuren widerstandsfähiger Werkstoff. Das Silan besitzt dabei vorzugsweise die allgemeine Formel 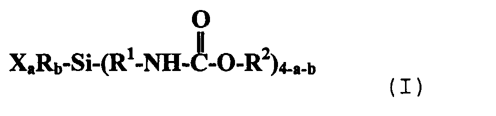 worin die genannten Reste die folgende Bedeutung haben:
X ist ausgewählt unter Wasserstoff, Halogen, Hydroxy, Alkoxy, Acyloxy, Alkoxycarbonyl oder NR2 und kann gegebenenfalls in einer Verbindung der Formel (I) unterschiedliche Bedeutung haben,
R ist ggf substituiertes Alkyl, Alkenyl, Aryl, Alkylaryl oder Arylalkyl
R1 ist ggf. substituiertes Alkylen, Arylen oder Alkylenarylen
R2 ist ein mindestens eine C=C-Doppelbindung, insbesondere mindestens eine Acrylat- oder Methacrylatgruppen enthaltender, über Kohlenstoff an die Urethangruppe gebundener Rest,
   wobei möglicherweise vorhandene Arylreste vorzugsweise elektronenziehende Substituenten aufweisen oder in unmittelbarer Nachbarschaft von elektronenziehenden Gruppen angeordnet sind,
a ist 1,2 oder 3,
b ist 0, 1 oder 2 und
(a+b) ist <3 oder ist gleich 3.

## Beschreibung

Die vorliegende Erfindung betrifft die Verwendung anorganischorganischer Polymere und Copolymere, die zumindest in wesentlichen Anteilen durch hydrolytische Kondensation und organische Polymerisation aus entsprechenden Silanverbindungen hergestellt sind, als gegenüber konzentrierten, oxidierenden Säuren widerstandsfähige Werkstoffe.

Es gibt eine Reihe von Kunststoffen unterschiedlichster Basis, von denen bekannt ist, daß sie mehr oder weniger gegenüber konzentrierter Salpetersäure resistent sind. Hierzu zählen beispielsweise Polymerfasern auf der Basis von Polyphenylensulfon, polycyclische Olefinpolymere, die mit Halogenen, Interhalogenen oder Pseudohalogenen behandelt worden sind, und bestimmte Arten von Fluorgummi wie beispielsweise diejenigen, die sich aus der Emulsionscopolymerisation von Propylen und Tetrafluorethylen und der anschließenden Vulkanisation ableiten. Allerdings ist die Herstellung solcher Kunststoffe relativ aufwendig, und/oder die Materialien sind teuer. Meist kommen darüber hinaus aus toxikologischer Sicht problematische Bestandteile zum Einsatz, beispielsweise Halogene.

Aufgabe der vorliegenden Erfindung ist es daher, toxikologisch unbedenkliche, preisgünstig zugängliche Materialien bereitzustellen, die gegenüber konzentrierten, oxidierenden Säuren widerstandsfähig sind und dadurch an entsprechenden Orten als Beschichtung, Membran, Profilmaterial, Klebstoff, Formteil, Schutzverkleidung, Verkapselung oder dergleichen eingesetzt werden können.

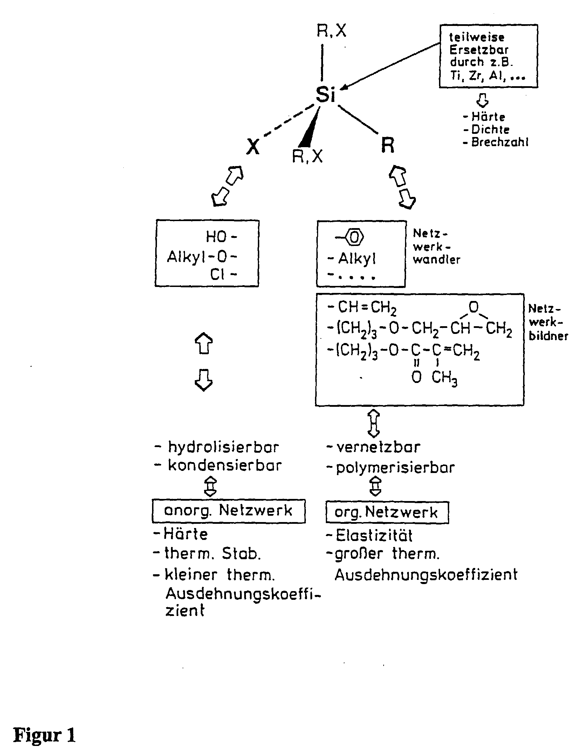

Erfindungsgemäß wird vorgeschlagen, anorganisch-organische Verbundpolymere oder Copolymere auf der Basis von Silanen, die auch als "ORMOCERE" (siehe Figur 1) bezeichnet werden, als säureresistente Werkstoffe einzusetzen. Allerdings hat sich dabei überraschend herausgestellt, daß sich manche dieser Werkstoffe ganz vorzüglich eignen, während andere völlig ungeeignet sind. Dies läßt sich durch Strukturüberlegungen nicht ausreichend vohersagen.

Die Aufgabe der Erfindung wird daher durch die Bereitstellung von anorganisch-organischen Zusammensetzungen auf der Basis von Silanen gelöst, wie sie in Anspruch 1 definiert sind.

Die Erfinder haben nämlich festgestellt, daß ein Test, durchgeführt an einem Probenkörper aus der Zusammensetzung mit glatter Oberfläche und Abmessungen von 2mm x 2mm x etwa 12mm, bei dem für einen Zeitraum von 10 Tagen dieser Probenkörper bei Raumtemperatur unter Lichtausschluß in 65%-iger HNO₃ gelagert wird, eine Abgrenzung zwischen brauchbaren und ungeeigneten bzw. weniger geeigneten Zusammensetzungen ermöglicht, wenn man als Kriterium das Ausbleiben eines Gewichtsverlustes und eine maximale Gewichtszunahme des anschließend mit destilliertem Wasser gründlich gewaschenen und getrockneten Probenkörpers von etwa 1,75% annimmt. Es ist dabei zu bemerken, daß man eine ähnliche Gewichtszunahme auch bei der Lagerung in reinem Wasser unter ansonsten identischen Bedingungen feststellen kann. Die Gewichtszunahme ist daher weniger der Einwirkung von Salpetersäure als einer allgemeinen geringen Hygroskopie der Oberfläche des Werkstoffs zuzuschreiben. Als zusätzliche Bewertungshilfsmittel kann das Aussehen der Probe sowie die Reinheit der Salpetersäure herangezogen werden.

Überraschenderweise konnte gefunden werden, daß neben einer Vielzahl ungeeigneter anorganisch-organischer Polymere der voranstehend aufgeführten Art solche die gewünschte Stabilität aufweisen, die im Netzwerk Urethangruppen aufweisen und deren organischer Teil über eine Polymerisationsreaktion von C=C-Doppelbindungen verknüpft oder vernetzt wurde. Beispiele sind Alkenylgruppen wie Vinyl-, oder Allylgruppen. Besonders bevorzugt sind Polymere, in denen der organische Teil durch Acrylat- und/oder Methacrylatgruppen verknüpft oder vernetzt ist. Auch konjugierte Doppelbindungen können in das organische Netzwerk eingebunden sein.

Ferner wurde gefunden, daß die Stabilität gegenüber oxidierenden Säuren durch die Einarbeitung von Füllstoffen in die Zusammensetzung stark verbessert wird. Es wurden geeignete Zusammensetzungen aufgefunden, die bei einem Gehalt von etwa 70 bis 80 Gew.-% Füllstoffen (beispielsweise SiO₂) unter den genannten Testbedingungen zu einer Gewichtszunahme des Probenblocks von nicht mehr als 0,1 bis 0,2 Gew.-% führen. Dies ist nur etwa 10% dessen, was eine vergleichbare Zusammensetzung ohne Füllstoff unter den Testbedingungen an Gewicht zunimmt.

Die erfindungsgemäß einsetzbaren Zusammensetzungen mit Urethangruppen sind vorzugsweise ganz oder teilweise aus Silanen der nachstehenden Formel I 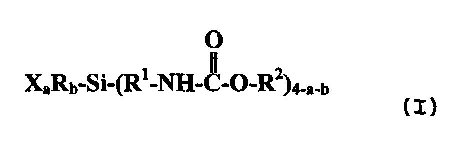 gebildet. Silane als Bausteine anorganisch-organischer Polymere weisen mindestens eine, maximal drei Gruppen auf, die unter geeigneten Bedingungen hydrolysierbar sind und die Ausbildung eines anorganischen Si-O-Si-Netzwerkes (Kondensation) ermöglichen. Diese Gruppen sind in der Formel (I) mit "X" bezeichnet. "X" kann beispielsweise Halogen (insbesondere Chlor, aber auch Fluor, Brom oder Jod), Hydroxy oder Alkoxy sein, unter entsprechenden Bedingungen auch Wasserstoff. Bei der Hydrolyse werden diese Gruppen unter Bildung von z.B. Halogenwasserstoffsäure oder Alkohol abgespalten. Die Gruppe R der Formel (I) ist ein sogenannter Netzwerkwandler und kann beispielsweise Alkyl, Alkenyl, Aryl, Alkylaryl oder Arylalkyl bedeuten. Es ist jedoch bevorzugt, daß R kein Aryl enthält. Wenn Arylgruppen vorhanden sind, sollten sie bevorzugt entweder benachbart zu einer elektronenziehenden Gruppe angeordnet oder mit mindestens einem elektronenziehenden Substituenten substituiert sein. Solche Substituenten sind dem Fachmann geläufig; genannt seien hier Halogen (F, Cl, Br, I), NO₂, CF₃, NR₃⁺, CO₂H, COOR, C(O)R, SO₃H, CN. Auch die Alkylgruppen können ggf. substituiert sein, z.B. mit F, Cl, Br, I, NH₂, NHR', NR₂, OH, OR, NO₂, CF₃, NR₃⁺, CO₂H, CO₂R', COR', SO₃H, CN. R' ist dabei vorzugsweise eine C₁-C₆-Alkylgruppe. An Silicium gebunden ist weiterhin mindestens ein sogenannter Netzwerkbildner, der gemäß der vorliegenden Formel (I) die erwähnte Urethangruppe sowie eine polymerisierbare Gruppe enthalten muß. In den erfindungsgemäßen Verbindungen ist die Urethangruppe vorzugsweise zwischen der oder den einer organischen Polyreaktion zugänglichen Gruppe(n) und dem Silicium angeordnet. Es kann sich dabei um Alkenyl-, Acrylat- oder Methacrylatgruppen oder andere Gruppen mit Doppelbindungen handeln. Auch Gruppen mit konjugierten Doppelbindungen sind geeignet.

Die erfindungsgemäßen Zusammensetzungen können ausschließlich aus derartigen Silanen gebildet sein, sie können jedoch auch weitere Bestandteile enthalten. So können sie unter Einbau weiterer Silanverbindungen gebildet sein, die den die Urethangruppe enthaltendenen Substituenten nicht aufweisen. Anstelle von oder zusätzlich zu solchen Silanen können auch Polysiloxane eingebaut werden, insbesondere OH-terminierte oder acrylatterminierte Polysiloxane, z.B. OH-terminierte oder acrylatterminierte Polydimethylsiloxane mit 100-200 Si-O-Einheiten. Auch kann das Silan im entstandenen Netzwerk teilweise durch andere Elemente aus der Gruppe B, Al, P, Sn, Pb, der Übergangsmetalle, der Lanthaniden und der Aktiniden ersetzt sein, beispielsweise durch Titan, Zirkonium oder Aluminium. Ein Besetzen eines Teils der Silicium-Plätze durch andere Elemente ist z.B. geeignet, um die Härte, die Dichte oder die Brechzahl der entstandenen Zusammensetzung zu variieren. Allerdings ist es erwünscht, daß nicht mehr als insgesamt 80 Gew.-% entsprechender hydrolytisch kondensierbarer Verbindungen (bzw. ggf. organisch einpolymerisierbarer Siloxane), bezogen auf das Silan der allgemeinen Formel (I), in die Zusammensetzung eingearbeitet sind. Bevorzugt sind sie in Mengen von nicht mehr als 40-60, stärker bevorzugt von nicht mehr als 10-20 Gew.-%, vorhanden. Vorzugsweise sollten nicht mehr als ca. 10 Mol-% der monomeren Silane bzw. der anderen genannten Metaliverbindungen arylhaltig sein.

Des weiteren kann die Elastizität, der Ausdehnungskoeffizient und/oder eine Vielzahl weiterer Eigenschaften der Endzusammensetzung durch eine geeignete Wahl der Netzwerkwandler-Gruppen bzw. der Netzwerkbildner-Gruppen variiert werden. Zusätzlich können derartige Eigenschaften durch den Zusatz weiterer organischer Verbindungen beeinflußt werden, die in den organischen Teil des Netzwerkes einpolymerisierbar sind, beispielsweise Acrylsäure, Methacrylsäure Di- oder Triacrylate, Di- oder Trimethacrylate, Polythiole oder dergleichen. So eignen sich längere geradkettige Verbindungen, die in 1- und ω-Stellung substituiert sind, zur Erhöhung der Elastizität (beispielsweise Octan-1,8-dioldimethacrylat, Decan-1,10-dioldiacrylat, Dodecan-1,12-dioldimethacrylat, oder Tetradecan-1,14-dioldiacrylat. Dagegen dienen Triacrylate oder Trimethacrylate oder dergleichen der Erzielung eines höheren Vernetzungsgrades und erhöhen damit die Härte der Zusammensetzung. Insgesamt sollten aber auch diese Verbindungen in einer Menge von nicht mehr als etwa 50 Gew.-%, bezogen auf das Polymere des Silans der Formel (I), eingesetzt werden. Häufig sind bereits kleinere Mengen, z.B. 5-30 Gew.-%, ausreichend.

Die Silane der allgemeinen Formel (I) sind bekannt oder für den Fachmann leicht darstellbar. Sie sind beispielsweise durch die Umsetzung eines entsprechenden Isocyanatosilans mit einem geeigneten, die gewünschten organisch polymerysierbaren Gruppen enthaltenden Alkohol zugänglich. Beispielhaft sei hier die Umsetzung von 3-Isocyanatopropyltriethoxysilan mit Pentaerythrit-triacrylat genannt:

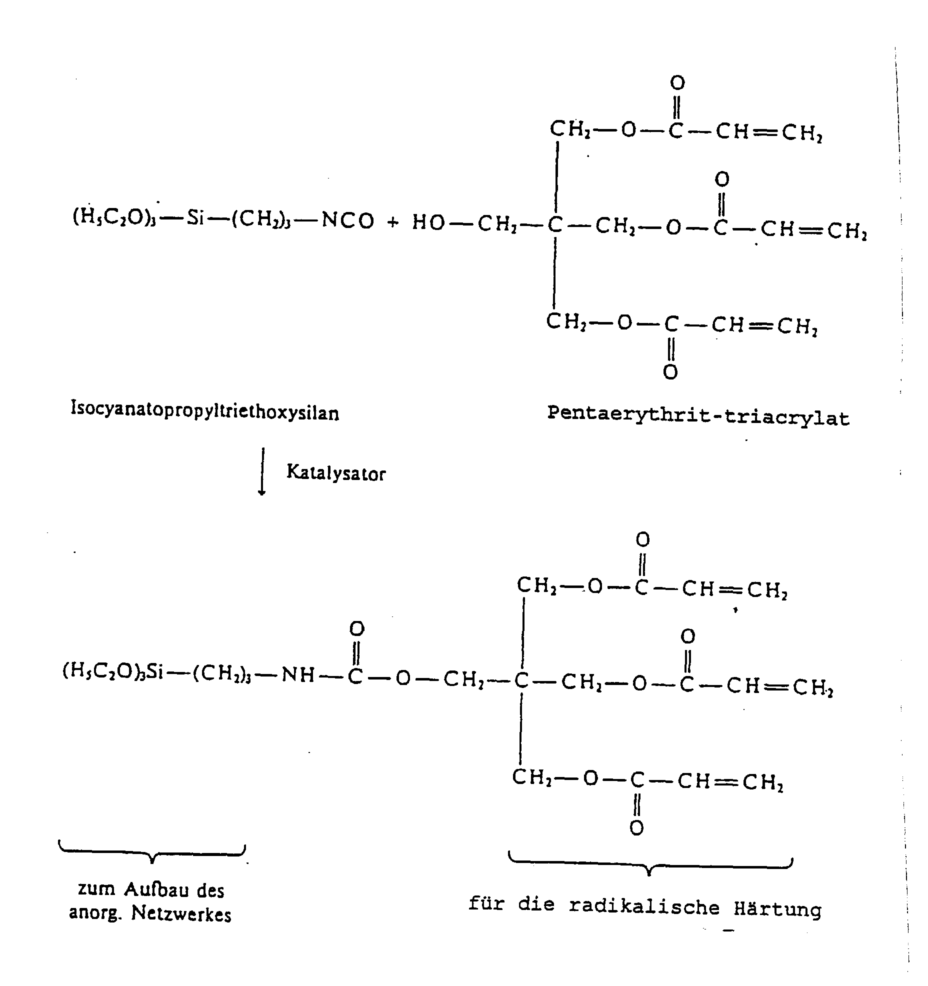

Besonders bevorzugt besitzt das Silan der Formel (I) eine Struktur, wie sie in Formel (II) dargestellt ist: 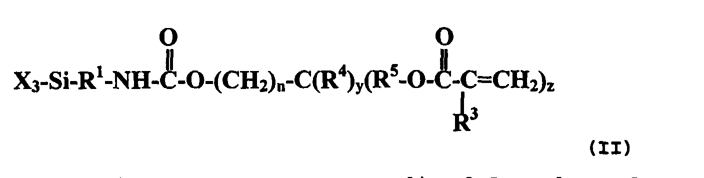 worin die genannten Reste die folgende Bedeutung haben:
X ist Methoxy, Ethoxy, n- oder Isopropoxy, n-, iso- oder t-Butoxy oder Wasserstoff,
R¹ ist Methylen, Ethylen, n- oder Isopropylen, n- oder Isobutylen, n- oder Isopentylen oder n- oder Isohexylen,
R³ ist Wasserstoff oder Methyl,
R⁴ ist Wasserstoff, C₁-C₄-Alkyl oder hydroxysubstituiertes C₁-C₄-Alkylen,
R⁵ ist nicht vorhanden oder C₁-C₄-Alkylen,
n ist 0, 1, 2, 3 oder 4,
y ist 0, 1 oder 2,
z ist 1, 2 oder 3 und
(y+z) ist 3.

Das entstandene Silan der Formel (II) enthält bevorzugt Alkoxygruppen, die unter Abspaltung von Alkohol zum Aufbau eines anorganischen Netzwerkes (Si-O-Si-Einheiten) zur Verfügung stehen, während die Doppelbindungen der Acrylatgruppen unter Aufbau eines organischen Netzwerkes polymerisiert werden können.

Das anorganische Netzwerk wird üblicherweise, ggf. unter Zusatz anderer co-kondensierbarer Komponenten wie oben beschrieben, hydrolysiert und polykondensiert. Die Hydrolyse und Polykondensation erfolgt vorzugsweise nach dem Sol-Gel-Verfahren, wie es z.B. in den deutschen Patenten/Offenlegungsschriften DE 27 58 414, 27 58 415, 3 011 761, 38 26 715, 38 35 968, oder 40 11 044 beschrieben ist.

Zum Aufbau des organischen Netzwerkes werden die gewählten Silane, ggf. unter Zusatz anderer copolymerisierbarer Komponenten, wie oben beschrieben polymerisiert. Die Polymerisation kann z.B. thermisch, photochemisch oder chemisch unter Einsatz von Verfahren erfolgen, wie sie beispielsweise in den deutschen Patenten/Qffenlegungsschriften DE 31 43 820, 38 26 715 oder 38 35 968 beschrieben sind, wobei ggf. geeignete Hilfsstoffe wie Katalysatoren, Polymersationsbeschleuniger oder dergleichen zugesetzt werden.

Besonders geeignete Verbindungen zur Herstellung der Silane gemäß den Formeln (I) bzw. (II) sind z.B. Isocyanatosilane der folgenden Zusammensetzung (III): 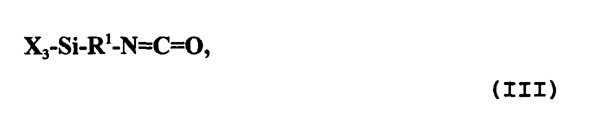 und Verbindungen der Formel (IV) als Alkoholkomponente: 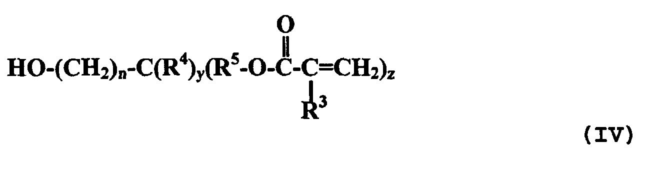 wobei die Reste beider Formeln die für Formel (II) angegebene Bedeutung haben.

Ganz besonders bevorzugt haben die Substituenten in den Formeln (III) und (IV) die folgende Bedeutung:
X ist Ethoxy
R¹ ist n-Propylen
R³ ist Wasserstoff oder Methyl,
R⁴ ist Wasserstoff
R⁵ ist Methylen
n ist 0 oder 1
y ist 0 oder 1
z ist 1 oder 2 und
(y+z) ist 3.

Ein bevorzugtes Silan der Formel III ist 3-Isocyanato-n-propyltriethoxysilan, bevorzugte Alkohole der Formel IV sind Glycerin-1,3-dimethacrylat, Pentaerythrit-triacrylat, Trimethylolpropan-1,3-dimethacrylat oder 2-Hydroxyethylmethacrylat.

Zur Modifizierung der anorganischen Komponente kann beispielsweise Tetraalkoxytitanat oder ggf. modifiziertes Zirkonalkylat zugesetzt werden. So kann die Zusammensetzung beispielsweise unter Zugabe des Produkts von Zirkon-n-propylat und Acrylsäure oder Methacrylsäure (im Molverhältnis 1:1 umgesetzt) in einer Menge von 10-50 Mol-%, bezogen auf die Molmenge an vorhandenem Silan der Formel (I), hergestellt sein.

Besonders bevorzugt ist es, daß die erfindungsgemäß verwendbare Zusammensetzung Füllstoft enthält. Hierdurch kann die Widerstandsfähigkeit gegenüber oxidierenden anorganischen Säuren deutlich erhöht werden. In besonders bevorzugten Zusammensetzungen konnte eine Füllstoffmenge von etwa 65 - 85 Gew.-%, bezogen auf das Gesamtgewicht der Zusammensetzung, die Gewichtszunahme eines wie oben beschriebenen Probenköpers bei der oben beschriebenen Lagerung in konzentrierter Salpetersäure auf etwa 1/10 reduzieren. Selbstverständlich sind auch geringere Mengen an Füllstoff, z.B. 10-40 Gew.-%, möglich.

Als Füllstoffe eignen sich alle üblichen inerten Substanzen, insbesondere Siliciumdioxid und alle Arten von anorganischen Gläsern, Sulfate oder dergleichen. Auch Phosphate sind ggf. geeignet. Besonders bevorzugt ist es, den Füllstoff pulverförmig, beispielsweise in Form annähernd sphärischer Partikel, einzusetzen. Alternativ kann er als Suspension eines Pulvers in einem bevorzugt niedrig viskosen und/oder niedrig siedenden Lösungsmittel eingesetzt werden, das anschließend wieder entfernt wird.

Der erfindungsgemäße Test hat darüber hinaus zu dem Ergebnis geführt, daß anorganisch-organische Polymere der eingangs genannten Art dann ungeeignet für die gewünschte Verwendung sind, wenn die organische Härtungsreaktion der Silane ausschließlich auf der Addition von S-H-Bindungen von Polythiolen an C=C-Doppelbindungssystemen beruht oder ihre organische und anorganische Vernetzung auf der Polymerisation bzw. Hydrolyse und Kondensation von Alkoxy- bzw. Hydroxysilanen beruht, die direkt an das Silicium gebundene, unsubstituierte Phenylgruppen enthalten.

Erfindungsgemäß werden die oben beschriebenen Zusammensetzungen als Werkstoffe eingesetzt, die gegenüber konzentrierten oxidierenden Säuren widerstandsfähig sind. Mögliche Anwendungsgebiete sind beispielsweise die folgenden:
1. Als Membranen oder Filtermaterialien zur Stofftrennung: Synthetische polymere Membranen und Filter spielen heute eine sehr wichtige Rolle für die praktische Anwendung in verschiedenen Trennprozessen. Trotz ihrer guten Filtrationseigenschaften haben bisher eingesetzte Membranen verschiedene Nachteile, soweit diese ihre Selektivität bei gleichzeitiger chemischer und thermischer Beständigkeit betreffen. Es wurden zwar in den letzten Jahren beträchtliche Anstrengungen unternommen, um neue Membranen mit insgesamt besseren Eigenschaften zu entwickeln, darunter unter anderem fluorhaltige Membranen, die eine gute thermische und chemische Stabilität aufweisen. Es bleibt jedoch wünschenswert, gegenüber oxidierenden Säuren widerstandsfähige Membranen und Filter bereitzustellen.
2. Beschichtungen: Beschichtungen werden bereits häufig unter Zuhilfenahme von ORMOCER-Werkstoffen hergestellt. Solche Beschichtungen können beispielsweise als Schutz für eine darunter liegende Oberfläche gegenüber oxidierenden Säuren dienen.
3. In der Bauindustrie, z.B. zur Erzeugung von Profilmaterialien aus (Hohl)Glaskugeln und anorganisch-organischen Polymeren. In der Bauindustrie werden häufig Epoxidharze eingesetzt. Allerdings werden die entsprechenden Werkstoffe häufig korrosiv angegriffen, beispielsweise durch Laugen, organische und anorganische Säuren, Lösungsmittel oder Kraftstoffe. Hier ist durch den erfindungsgemäßen Einsatz eine deutliche Verbesserung gegeben.
4. Verkapselungsmaterialien. Beispielsweise können organische und anorganische Pigmente, die eine erhöhte Empfindlichkeit gegenüber oxidierenden Säuren aufweisen, mit Zusammensetzungen der oben genannen Art verkapselt werden.
5. Eine weitere Anwendungsmöglichkeit ist die Herstellung von säurestabilen Partikeln, Fasern, Hohlfasern und Folien. Die Herstellung von solchen Körpern aus anorganisch-organischen Verbundpolymeren ist im Prinzip bekannt. Die entsprechenden Verfahren können auf die erfindungsgemäßen Werkstoffe übertragen werden.

Nachstehend soll die Erfindung anhand von Ausführungsbeispielen näher erläutert werden.

### Beispiel 1: Lagerung von Probenkörpern in Salpetersäure

Ein Probenkörper mit glatter und glänzender Oberfläche mit den Abmessungen 2mm x 2mm x 12 (oder 10 oder 11) mm, hergestellt unter Verwendung mindestens eines Silans der Formel (I) gemäß den Angaben dieser Erfindung wird gewogen und sodann insgesamt 5 oder 10 Tage lang unter Lichtausschluß bei 25°C mit 10 ml 65%iger HNO₃ überschichtet. Nach den ersten 6 1/2 Stunden wird er auf visuell erkennbare Veränderungen untersucht, desgleichen die Salpetersäure. Nach 24 Stunden wird er aus der Salpetersäure entnommen, mit destilliertem Wasser gewaschen und 24 Stunden an der Luft getrocknet. Anschließend wird er wiederum gewogen. Daraufhin wird er weiterhin unter denselben Bedingungen in 65 %iger Salpetersäure aufbewahrt, bis die Lagerungsdauer insgesamt 5 oder 10 Tage währt. Schließlich wird er erneut untersucht und gewogen.

### Beispiele 2 bis 10: Herstellung und Untersuchung von geeigneten Zusammensetzungen

### Beispiel 2

Zur Vorlage von 114,3 g (0,5 mol) Glycerin-1,3-dimethacrylat und 3,17 g (0,005 mol) Dibutylzinndilaurat (als Additionskatalysator) werden bei Raumtemperatur unter trockener Luft 123,7 g (0,5 mol) 3-Isocyanato-n-propyltriethoxysilan getropft. Nach etwa 20-stündigem Rühren ist die Addition vollzogen (IR-Kontrolle) und es werden 500 ml Essigester und 67,58 g (0,1 mol) Dodecan-1,12-dioldimethacrylat zugesetzt. Zur Hydrolyse und Kondensation werden 22,13 g Wasser (incl. Katalysator) zugesetzt. Nach ca. 1-tägigem Rühren bei Raumtemperatur wird mit Wasser ausgeschüttelt, filtriert, einrotiert und an der Ölpumpe vollständig von flüchtigen Bestandteilen befreit.

Das entstandene klare, nahezu farblose, flüssige Harz wurde in einer Ausbeute von ca. 95% erhalten. Für die folgende Aushärtung wurden 1 Gew.-% Irgacure-184 (Ciba-Geigy) zugesetzt und eine entsprechende Menge in eine Form mit den Abmessungen 10mm x 2mm x 2mm gefüllt. Die durchsichtige Form wurde verschlossen und mit UV-Licht bestrahlt.

Der gebildete Probenkörper war farblos und transparent und besaß eine glänzende Oberfläche. Er hatte ein Gewicht von 0,1564 g.

Nach sechseinhalbstündiger Lagerung in 65 %-iger HNO₃ bei 25°C wies er äußerlich keine visuell erkennbaren Veränderungen auf; auch fanden sich keine Trübstoffe in der Salpetersäure. Die Lagerung des Probenkörpers in 65 %-iger Salpetersäure wurde bis zu einer Gesamtdauer von 24 Stunden fortgesetzt. Dabei konnten keine sichtbaren Veränderungen gegenüber der sechseinhalbstündigen Lagerung festgestellt werden. Anschließend wurde der Probenkörper mit destilliertem Wasser gewaschen und bei 25°C 24 Stunden lang an der Luft getrocknet und nochmals gewogen. Er wog 0,1587 g, hatte also 1,47 Gew.-% zugenommen. Sein Aussehen war unverändert. Weiteres mehrtägiges Liegenlassen in 65%iger Salpetersäure und/oder an Luft veränderte weder sein Aussehen noch sein Gewicht.

### Beispiel 3

Beispiel 2 wurde wiederholt, jedoch wurde dem Kondensat vor der organischen Polymerisation außer dem Dioldimethacrylat 0,05 mol Pentaerythritoltetrakismercaptopropionat zugesetzt. Die organische Vernetzung erfolgte wie für Beispiel 2 beschrieben, jedoch hatte der Probenkörper die Abmessungen 12 mm x 2 mm x 2mm.

Der gebildete Probenkörper hatte das gleiche Äußere wie der des Beispiels 2. Er besaß ein Gewicht von 0,1704 g. Die Lagerung des Probenkörpers in 65 %-iger Salpetersäure wurde bis zu einer Gesamtdauer von 24 Stunden fortgesetzt. Dabei konnten keine sichtbaren Veränderungen gegenüber der sechseinhalbstündigen Lagerung festgestellt werden. Anschließend wurde der Probenkörper mit destilliertem Wasser gewaschen und bei 25°C 24 Stunden lang an der Luft getrocknet und nochmals gewogen. Er wog 0,1728 g, hatte also 1,41 Gew.-% zugenommen. Sein Aussehen war unverändert. Weiteres mehrtägiges Liegenlassen in 65%iger Salpetersäure und/oder an Luft veränderte weder sein Aussehen noch sein Gewicht.

### Beispiel 4

a) Zur Vorlage von 182,6 g (0,8 mol) Glycerin-1,3-dimethacrylat und 5,05 g (0,008 mol) Dibutylzinndilaurat (als Additionskatalysator) werden bei Raumtemperatur unter trockener Luft 197,9 g (0,8 mol) 3-Isocyanato-n-propyltriethoxysilan getropft. Nach etwa 20-stündigem Rühren ist die Addition vollzogen (IR-Kontrolle) und es werden 800 ml Essigester und 81,12 g (0,24 mol) Dodecan-1,12-dioldimethacrylat zugesetzt.
b) Zur Vorlage von 136,1 g einer 77%igen Lösung von Zr(nOPr)₄ in n-Propanol (= 0,32 mol Zr(nOPr)₄) werden unter Eiskühlung rasch 27,5 g (0,32 mol) Methacrylsäure getropft und das Reaktionsgemisch wird 20 Stunden gerührt. Anschließend versetzt man es unter Rühren mit dem in a) erzeugten Ansatz.
c) Zur Hydrolyse und Kondensation werden 43,87 g Wasser (incl. Katalysator) zu dem aus b) hervorgehenden Gemisch gegeben. Nach ca. 1-tägigem Rühren bei Raumtemperatur wird mit Wasser ausgeschüttelt, filtriert, einrotiert und an der Ölpumpe vollständig von flüchtigen Bestandteilen befreit. Das leicht gelbliche Harz wird in einer Ausbeute von ca. 95% erhalten und kann nach Versetzen mit 1 Gew.-% Irgacure so in Form eines Probekörpers ausgehärtet werden.

Der erhaltene Probenkörper hatte das gleiche Aussehen wie die Probenkörper der Beispiele 2 und 3. Er besaß die Abmessungen 11 mm x 2 mm x 2 mm und wog 0,1807 g. Nach sechseinhalbstündiger Lagerung in 65 %-iger HNO₃ bei 25°C wies er äußerlich keine visuell erkennbaren Veränderungen auf; auch fanden sich keine Trübstoffe in der Salpetersäure. Bei einer insgesamt 24-stündigen Lagerung in HNO₃ konnten keine sichtbaren Veränderungen gegenüber der sechseinhalbstündigen Lagerung festgestellt werden. Nach Waschen und Trocknen wog der Probenkörper 0,1837 g, hatte also 1,66 Gew.-% zugenommen. Sein Aussehen war unverändert. Nach insgesamt 10-tägigem Liegenlassen in 65%iger Salpetersäure wurde - nach Waschen mit destilliertem Wasser und 24-stündigem Trocknen bei 25°C an der Luft - eine Gewichtszunahme von insgesamt 1,21% festgestellt. Das Aussehen der Probe war unverändert.

### Beispiel 5

Beispiel 4 wurde wiederholt; jedoch wurden nur 0,16 mol Zirkon-n-propylat und 0,16 mol Methacrylsäure eingesetzt; außerdem wurden dem Kondensat vor der Polymerisation 77,8 Gew.-%, bezogen auf das Endgewicht der Probe, eines Füllstoffs aus 30% Aerosil OX50, silanisiert mit Methacryloxypropyltrimethoxysilan (MEMO), und 70% Feinstglas, silanisiert mit MEMO und mit einem mittleren Partikeldurchmesser von 1.5µm, zugesetzt.

Der erhaltene Probenkörper besaß die Abmessungen 12mm x 2mm x 2mm und wog 0,2191 g. Er war weiß und undurchsichtig und besaß eine glänzende Oberfläche. Nach sechseinhalbstündiger Lagerung in 65 %-iger HNO₃ bei 25°C war er äußerlich unverändert; auch fanden sich keine Trübstoffe in der Salpetersäure. Bei einer insgesamt 24-stündigen Lagerung in HNO₃ konnten keine sichtbaren Veränderungen gegenüber der unbehandelten Probe festgestellt werden. Nach Waschen und Trocknen wog der Probenkörper 0,2191 g, hatte also 0,14 Gew.-% zugenommen. Sein Aussehen war unverändert. Weiteres mehrtägiges Liegenlassen in 65%iger Salpetersäure und/oder an Luft veränderte weder sein Aussehen noch sein Gewicht.

### Beispiel 6

Das Beispiel 5 wurde mit folgenden Änderungen wiederholt: Die Menge an Dodecan-1,12-dioldimethacrylat betrug 0,16 mol, die an Zirkon-n-propylat 0,32 mol, die an Methacrylsäure 0,32 mol. Der Füllstoff wurde in einer Menge von 71,4 Gew.-%, bezogen auf die Gesamtzusammensetzung, zugesetzt.

Der erhaltene Probenkörper besaß die Abmessungen 11mm x 2mm x 2mm und wog 0,1879 g. Er hatte das gleiche Aussehen wie der des Beispiels 6. Nach sechseinhalbstündiger Lagerung in 65 %-iger HNO₃ bei 25°C war er äußerlich unverändert; auch fanden sich keine Trübstoffe in der Salpetersäure. Bei einer insgesamt 24-stündigen Lagerung in HNO₃ konnten keine sichtbaren Veränderungen gegenüber der unbehandelten Probe festgestellt werden. Nach Waschen und Trocknen wog der Probenkörper 0,1884 g, hatte also 0,27 Gew.-% zugenommen. Sein Aussehen war unverändert. Weiteres mehrtägiges Liegenlassen in 65%iger Salpetersäure und/oder an Luft veränderte weder sein Aussehen noch sein Gewicht.

### Beispiel 7

Das Beispiel 5 wurde mit folgenden Änderungen wiederholt: Die Menge an Zirkon-n-propylat betrug 0,32 mol, die an Methacrylsäure 0,32 mol. Der Füllstoft wurde in einer Menge von 75,6 Gew.-%, bezogen auf die Gesamtzusammensetzung, zugesetzt.

Der erhaltene Probenkörper besaß die Abmessungen 12mm x 2mm x 2mm und wog 0,1918 g. Er hatte das gleiche Aussehen wie die der Beispiele 6 und 7 . Nach sechseinhalbstündiger Lagerung in 65 %-iger HNO₃ bei 25°C war er äußerlich unverändert; auch fanden sich keine Trübstoffe in der Salpetersäure. Bei einer insgesamt 24-stündigen Lagerung in HNO₃ konnten keine sichtbaren Veränderungen gegenüber der unbehandelten Probe festgestellt werden. Nach Waschen und Trocknen wog der Probenkörper 0,1921 g, hatte also 0,15 Gew.-% zugenommen. Sein Aussehen war unverändert. Nach weiterem Liegenlassen in 65%iger Salpetersäure bis zu einer Gesamtdauer von 10 Tagen, anschließendem Waschen mit destilliertem Wasser und 24-ständigem Trocknen an der Luft bei 25°C wurde keine weitere Gewichtszunahme beobachtet. Das Aussehen der Probe war unverändert.

### Beispiel 8

Das Beispiel 7 wurde mit folgender Änderung wiederholt: Als Füllstoft wurden sphärische SiO₂-Partikel (mittlerer Durchmesser: 230 nm) in einer Menge von 79,2 Gew.-%, bezogen auf die Gesamtzusammensetzung, zugesetzt.

Der erhaltene Probenkörper besaß die Abmessungen 10mm x 2mm x 2mm und wog 0,1942 g. Er hatte das gleiche Aussehen wie der des Beispiels 7. Nach sechseinhalbstündiger Lagerung in 65 %-iger HNO₃ bei 25°C war er äußerlich unverändert; auch fanden sich keine Trübstoffe in der Salpetersäure. Bei einer insgesamt 24-stündigen Lagerung in HNO₃ konnten keine sichtbaren Veränderungen gegenüber der unbehandelten Probe festgestellt werden. Nach Waschen und Trocknen wog der Probenkörper 0,1944 g, hatte also 0,27 Gew.-% zugenommen. Sein Aussehen war unverändert. Weiteres mehrtägiges Liegenlassen in 65%iger Salpetersäure und/oder an Luft veränderte weder sein Aussehen noch sein Gewicht.

### Beispiel 9

Das Beispiel 7 wurde mit folgender Änderung wiederholt: Als Füllstoff wurde der des Beispiels 5 eingesetzt, und zwar in einer Menge von 75,0 Gew.-%, bezogen auf die Gesamtzusammensetzung.

Der erhaltene Probenkörper besaß die Abmessungen 12mm x 2mm x 2mm und wog 0,1814 g. Er hatte das gleiche Aussehen wie der des Beispiels 7. Nach sechseinhalbstündiger Lagerung in 65 %-iger HNO₃ bei 25°C war er äußerlich unverändert; auch fanden sich keine Trübstoffe in der Salpetersäure. Bei einer insgesamt 24-stündigen Lagerung in HNO₃ konnten keine sichtbaren Veränderungen gegenüber der unbehandelten Probe festgestellt werden. Nach Waschen und Trocknen wog der Probenkörper 0,1818 g, hatte also 0,22 Gew.-% zugenommen. Sein Aussehen war unverändert. Weiteres mehrtägiges Liegenlassen in 65%iger Salpetersäure und/oder an Luft veränderte weder sein Aussehen noch sein Gewicht.

### Beispiel 10

Das Beispiel 9 wurde wiederholt, wobei jedoch als Polymerisationskatalysator 1 Gew.-% Lucirin TPO (BASF AG, Ludwigshafen) verwendet wurde. Die Aushärtung des Probenkörpers erfolgte mit Blaulicht.

Der erhaltene Probenkörper besaß die Abmessungen 11mm x 2mm x 2mm und wog 0,1823 g. Er hatte das gleiche Aussehen wie der des Beispiels 7. Nach sechseinhalbstündiger Lagerung in 65 %-iger HNO₃ bei 25°C war er äußerlich unverändert; auch fanden sich keine Trübstoffe in der Salpetersäure. Bei einer insgesamt 24-stündigen Lagerung in HNO₃ konnten keine sichtbaren Veränderungen gegenüber der unbehandelten Probe festgestellt werden. Nach Waschen und Trocknen wog der Probenkörper 0,1830 g, hatte also 0,38 Gew.-% zugenommen. Sein Aussehen war unverändert. Weiteres mehrtägiges Liegenlassen in 65%iger Salpetersäure und/oder an Luft veränderte weder sein Aussehen noch sein Gewicht.

### Vergleichsbeispiel 1

Gemäß der Vorschrift aus der DE 196 27 198, Beispiele 16 und 17 wurden 1,0 mol Trimethylolpropantriacrylat mit 3,1 mol frisch hergestelltem Cyclopentadien versetzt. Zu dem Trinorbornen-Produkt wurden in Essigester 1,0 mol Mercaptopropylmethyldimethyloxysilan unter Schutzgasatmosphäre zugetropft. Das entstandene Silan wurde durch Abziehen des Lösungsmittels isoliert und anschließend mit der äquimolalen Menge Wasser hydrolysiert. Nach vollständigem Umsatz wurde das Harz mit 0,2 mol Ethylenglycoldimethacrylat und 0,6 mol Pentaerythritoltetrakismercaptopropionat sowie einem Initiator versetzt, die Mischung wurde in eine entsprechende Probenform gegeben und ausgehärtet.

Der erhaltene, farblose, klare Probenkörper besaß die Abmessungen 10mm x 2mm x 2mm und wog 0,3823 g. Nach sechseinhalbstündiger Lagerung in 65 %-iger HNO₃ bei 25°C war er zerfleddert; die Salpetersäure hatte sich unter Entwicklung nitroser Gase gelb verfärbt. Nach 24-stündiger Lagerung war die Probe fas vollständig zerfressen, wenig später hatte sie sich vollständig aufgelöst.

### Vergleichsbeispiel 2

Eine Suspension aus 3 Liter Ethanol, 357 g 85%iger KOH (5,41 mol) und 23,9 g (0,28 mol) NaHCO₃ wurde unter Rühren (KPG-Rührer) und unter Rückfluß mit einer Mischung aus 265 g (1,875 mol) Methylvinyldichlorsilan, 228 g (0,900 mol) Diphenyldichlorsilan und 15,6 g (0,075 mol) Tetraethoxysilan versetzt. Dabei bildete sich ein voluminöser weißer Niederschlag von KCl bzw. NaCl. Nach beendeter Zugabe der Silane wurde weiter 2 Stunden unter Rückfluß erhitzt und anschließend auf Raumtemperatur abgekühlt. Nach Zutropfen von 33,2 g (0,15 mol) γ-Aminopropyltriethoxysilan unter Rühren wurde die Reaktionsmischung 1 Stunde unter Rückfluß erhitzt und daraufhin ca. 17 Stunden bei Raumtemperatur gerührt. Anschließend wurde der Niederschlag durch Druckfiltration abgetrennt und mit 400 ml Ethanol nachgewaschen. Das klare Filtrat wurde im Wasserstrahlvakuum (40 mbar) eingeengt und aufgearbeitet (Waschen, Filtrieren, Aufnehmen in Toluol).

Aus der so erhaltenen klaren Lösung wurde eine Folie gezogen, die gelblich, durchsichtig und etwas trübe war.

Ein Folienstück mit den Abmessungen 32 mm x 24 mm x 0,05 mm zeigte nach 6½-stündiger Lagerung in HNO₃ drei schwarz verfärbte Stellen (ca. 2 mm²). Nach 24 Stunden war die HNO₃ im Bereich der Probe schwarz gefärbt, die Probe war braunschwarz.

### Vergleichsbeispiel 3

Eine Folie, hergestellt wie in Vergleichsbeispiel 2, jedoch ohne Aminzusatz, war nach 6½-stündiger Lagerung in 65%iger HNO₃ schwarz verfärbt und bereits teilweise zerbrochen.

## Patentansprüche

1. Verwendung einer makromolekularen Zusammensetzung, gebildet durch hydrolytische Kondensation und organische Polyreaktion mindestens eines Silans mit mindestens einem einer hydrolytischen Kondensation unter Ausbildung von Si-O-Si-Bindungen zugänglichen Substituenten und mindestens einem organischen Substituenten, der eine einer entsprechenden organischen Polyreaktion unterwerfbare Gruppe trägt, gegebenenfalls unter Zusatz (a) weiterer hydrolytisch kondensierbarer Verbindungen von Elementen aus der Gruppe B, Al, P, Sn, Pb, der Übergangsmetalle, der Lanthaniden und der Aktiniden und/oder (b) weiterer organischer einpolymerisierbarer Verbindungen und/oder (c) von Siloxanen, wobei diese Zusammensetzung gegebenenfalls (d) Füllstoffe enthält und in Form eines Probenkörpers mit den Abmessungen 2mm x 2mm x 12mm bei einer 10-tägigen Lagerung in 65%iger HNO3 bei 25°C nicht mehr als 1,75% Gewichtszunahme und keine Verfärbung aufweist, als gegenüber konzentrierten oxidierenden Säuren widerstandsfähiger Werkstoff.

2. Verwendung nach Anspruch 1, dadurch gekennzeichnet, daß die Zusammensetzung durch hydrolytische Kondensation und organische Polyreaktion eines oder mehrerer Silane der allgemeinen Formel I: 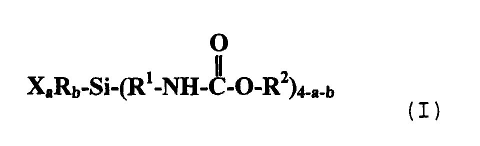 worin die genannten Reste die folgende Bedeutung haben:
X ist ausgewählt unter Wasserstoff, Halogen, Hydroxy, Alkoxy, Acyloxy, Alkoxycarbonyl oder NR₂ und kann gegebenenfalls in einer Verbindung der Formel (I) unterschiedliche Bedeutung haben,
R ist ggf. substituiertes Alkyl, Alkenyl, Aryl, Alkylaryl oder Arylalkyl,
R¹ ist ggf. substituiertes Alkylen, Arylen oder Alkylenarylen
R² ist ein mindestens eine C=C-Doppelbindung, insbesondere mindestens eine Acrylat- oder Methacrylatgruppe enthaltender, über Kohlenstoff an die Urethangruppe gebundener Rest, wobei möglicherweise vorhandene Arylreste vorzugsweise elektronenziehende Substituenten aufweisen oder in unmittelbarer Nachbarschaft von elektronenziehenden Gruppen angeordnet sind,
a ist 1,2 oder 3,
b ist 0, 1 oder 2 und
(a+b) ist <3 oder ist gleich 3,
und gegebenenfalls einer oder mehreren weiteren hydrolytisch kondensierbaren Verbindungen des Siliciums oder eines oder mehrerer Siloxane und/oder hydrolytisch kondensierbarer anderer Elemente aus der Gruppe B, Al, P, Sn, Pb, der Übergangsmetalle, der Lanthaniden und der Aktiniden in zusammen nicht mehr als 80 Gew-%, bezogen auf das Polymere des Silans der Formel (I), und/oder einer oder mehreren weiteren organischen einpolymerisierbaren Verbindungen mit Isocyanato-, Alkohol-, Thiol-, Acrylat- oder Methacrylatgruppen in zusammen nicht mehr als 50 Gew-%, bezogen auf das Polymere des Silans der Formel (I), gebildet ist und gegebenenfalls Füllstoffe enthält.

3. Verwendung nach Anspruch 2, worin die Reste des Silans der Formel (I) folgende Bedeutung haben:
X ist Wasserstoff, C₁-C₄-Alkoxy, Hydroxy oder Chlor und kann gegebenenfalls in einem Silan der Formel (I) unterschiedliche Bedeutungen haben,
R ist ggf. mit Halogen oder Aminogruppen substituiertes C₁-C₆-Alkyl oder C₁-C₆-Alkenyl,
R¹ ist C₁-C₁₀-Alkylen, Phenylen oder C₁-C₄-Alkylen-phenylen-C₀-C₄-Alkylen, wobei die ggf. vorhandene Phenylengruppe mit F, Cl, Br, I, NO₂, CF₃, NR₃⁺, CO₂H, CO₂R', COR', SO₃H oder CN substituiert ist und die Alkylengruppen ggf. mit F, Cl, Er, I, NH₂, NHR' oder NR'₂ substituiert sein können,
R² ist ein 1, 2 oder 3 Acrylat- oder Methacrylatgruppen enthaltender Rest mit 6 bis 50 Kohlenstoffatomen,
R' ist C₁-C₆-Alkyl
a ist 2 oder 3,
b ist 0 oder 1 und
(a+b) ist 3.

4. Verwendung nach Anspruch 3, worin die Zusammensetzung unter Verwendung eines Silans der allgemeinen Formel (II): 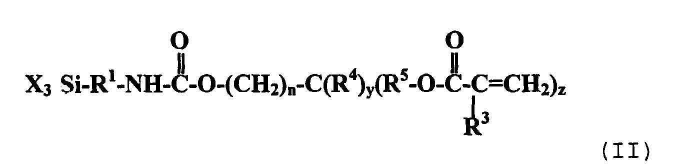 hergestellt ist, worin die genannten Reste die folgende Bedeutung haben:
X ist Methoxy, Ethoxy, n- oder Isopropoxy, n-, iso- oder t-Butoxy oder Wasserstoff,
R¹ ist Methylen, Ethylen, n- oder Isopropylen, n- oder Isobutylen, n- oder Isopentylen oder n- oder Isohexylen,
R³ ist Wasserstoff oder Methyl,
R⁴ ist Wasserstoff, C₁-C₄-Alkyl oder hydroxysubstituiertes C₁-C₄-Alkylen,
R⁵ ist nicht vorhanden oder C₁-C₄-Alkylen,
n ist 0, 1, 2, 3 oder 4,
y ist 0, 1 oder 2,
z ist 1, 2 oder 3 und
(y+z) ist 3.

5. Verwendung nach Anspruch 4, worin die genannten Reste die folgende Bedeutung haben:
X ist Ethoxy,
R¹ ist n-Propylen,
R³ ist Wasserstoff oder Methyl,
R⁴ ist Wasserstoff,
R⁵ ist Methylen
n ist 0 oder 1,
y ist 1,
z ist 1 oder 2 und
(y+z) ist 3.

6. Verwendung nach einem der voranstehenden Ansprüche, worin die Zusammensetzung als organische, über Additions- oder Kondensationsreaktionen einpolymerisierbare Verbindungen Acrylsäure und/oder Methacrylsäure, ein oder mehrere Di- oder Triacrylate und/oder Di- oder Trimethacrylate und/oder ein oder mehrere Polythiole, ausgewählt unter Di-, Tri-, Tetra- und Pentathiolen, enthält.

7. Verwendung nach Anspruch 6, worin die Zusammensetzung als weitere organische einpolymerisierbare Verbindung(en) α,ω-Dioldi(meth)acrylat, insbesondere Dodecan-1,12-dioldimethacrylat enthält.

8. Verwendung nach einem der voranstehenden Ansprüche, worin die Zusammensetzung eine hydrolytisch kondensierbare Verbindung des Zirkons, insbesondere das Reaktionsprodukt von Zirkon-C₁-C₄-alkylat mit Acrylsäure oder Methacrylsäure enthält.

9. Verwendung nach einem der voranstehenden Ansprüche, worin die Zusammensetzung Füllstoft in einer Menge von 0-85 Gew.-%, bezogen auf das Gesamtgewicht der Zusammensetzung, enthält.

10. Verwendung nach Anspruch 9, worin die Zusammensetzung Füllstoft in einer Menge von 50-80 Gew.-%, bezogen auf das Gesamtgewicht der Zusammensetzung, enthält.

11. Verwendung nach einem der voranstehenden Ansprüche, worin der Füllstoff ausgewählt ist unter Siliciumdioxid, Gläsern, Sulphaten und Phosphaten und/oder in Pulverform, in Form kleiner sphärischer Partikel oder in Faserform vorliegt.

12. Verwendung nach einem der voranstehenden Ansprüche, dadurch gekennzeichnet, daß der gegenüber konzentrierten, oxidierenden Säuren widerstandsfähige Werkstoff als Beschichtung, Membran, Profilmaterial, Klebstoff, Formteil, Schutzverkleidung oder Verkapselung eingesetzt wird.
